# EUROPEAN PATENT SPECIFICATION

(11) **EP 3 098 031 B1**
(45) Date of publication and mention of the grant of the patent: **13.09.2017**
(21) Application number: 16167030.2
(22) Date of filing: 26.04.2016
(51) Int. Cl.: B25J 5/00, B25J 11/00, B25J 15/04, F41H 11/16, F41H 11/136

(54) **ROBOT WITH TOOLHOLDER SUPPORT**
ROBOTER MIT WERKZEUGHALTERTRÄGER
ROBOT AVEC SUPPORT DE PORTE-OUTIL

(30) Priority: 28.05.2015 ES 201530743
(43) Date of publication of application: 30.11.2016
(73) Proprietor: Proytecsa Security. S.L., 22500 Binefar (Huesca) (ES)
(72) Inventor: SALLEN ROSELLÓ, César, 22500 BINEFAR (Huesca) (ES); TORRES PUEO, Roberto, 22500 BINEFAR (Huesca) (ES)
(74) Representative: Ungria López, Javier

(56) References cited:
- WO-A1-2011/128891
- CN-A- 1 804 540
- DE-U1- 29 508 794
- JP-A- H0 538 690
- US-A- 4 545 723
- US-A1- 2009 044 655
- US-A1- 2010 068 024
- US-A1- 2013 313 791

## Description

### OBJECT OF THE INVENTION

As stated in the title of this descriptive report, the following invention refers to a robot with a toolholder support, the robot being of the type used in the manipulation of suspicious ordnances, such as potential explosive charges, wherein the essential object is to facilitate the potential use of precise tools for the robot itself to manipulate suspicious ordnances, as well as provide a wireless communication for their use.

In this way, it will be sufficient to introduce, remotely, the appropriate order to the robot such that, by means of the articulated arm thereof, it proceeds to select, use or change the related tool, without the robot needing any displacement, thus enabling an important saving of time.

### FIELD OF APPLICATION

The present description describes a robot with a toolholder support; said support may be coupled to all types of robots used in the manipulation of suspicious ordnances, allowing for changing and using an array of tools in a continuous manner.

### BACKGROUND OF THE INVENTION

As it is known, when manipulating explosive ordnances or conducting risky operations, even more so, when human lives are at risk, robots controlled remotely by means of a control console are used.

In addition, according to the application and use of the robot, its features are adapted thereto, allowing for variations both of its size and design features, and, thus, when the intention is to be used in perimeter surveillance activities in critical infrastructures, such as petrochemical and nuclear plants, as well as in big industries, the intention is to provide the robot with significant reach and range allowing for accessing and manipulating the ordnances detected on the other side of the perimeter to be surveilled.

In this way, we may consider the patent document ES 1 073 757 wherein a "remote-controlled robot for special operations" is described, which incorporates a 360°-pivotable turret to which an articulated arm ending in pliers is rigidly joined, such that said robot is equipped with excellent mobility and great flexibility, as well as with increased speed thus facilitating its displacement throughout the perimeter to be surveilled.

In addition, it features maximum precision and the 360° pivoting of the turret allows for reaching distant places and extracting the cables of a detonator, separating dangerous elements and moving delicate pieces by means of its pliers.

Thus, the configuration of the geometry of the articulated and telescopic arm, along with the 360°-rotation of the turret, allows for inspecting and manipulating suspicious objects placed outside the surveilled perimeter, as well as manipulating objects located in raised covers or storage tanks.

Document ES 2 241 490 describes a "*self propelled robot for the handling of explosive charges",* which features a caterpillar running gear adjustable in width to facilitate its displacement through rough terrains and incorporates an articulated arm with a first fork-shaped section that facilitates the folding of the free end provided with pliers between said first section in the shape of a fork and the robot of which incorporates a drag scraper, adjustable in width.

In addition, document ES 2 527 436 may be considered, wherein a *"robotised telescopic articulated arm"* is described, which may be mounted on an operational vehicle and whose arm is mounted on a 360°-pivotable turret, such that different tools may be mounted on the free end of its articulated end section, such as a scratching claw, a metal detector or air blower, with the aim of manipulating the explosive charge with the pliers once it has been detected. Document ES2540598 may be considered, which describes a "remote-controlled robotised vehicle", comprising two sets of wheels, each of them on the sides and featuring three wheels, these sets of wheels being actuated by their related motors; two caterpillar sets, one on each inner side of the sets of wheels, at a slightly higher level than the sets of wheels; a first hydraulically-driven articulated arm and mounted, through several double-articulation means, onto a 360°-pivotable turret through the central axis and a second electrically-driven articulated arm, pivotable about a mounting vertical axis, being remotely controlled such that by means of the two arms an object may be gripped with one arm and examined by the other one.

Finally, document DE 295 08 794 U1 discloses a mobile robot for working in a risky environment, the robot being provided with a toolholder support and an articulated arm carrying pliers and a vision camera.

### DESCRIPTION OF THE INVENTION

The present description describes a robot with a toolholder support, the robot being of the type used in the manipulation of suspicious ordnances, such as potential explosive charges, wherein an articulated arm is provided, generally ending in pliers, through which the suspicious ordnances are manipulated, such that the free end of the articulated arm or pliers incorporate a vision camera, while the robot body carries a toolholder support, the toolholder support being defined by a generally U-shaped structure through the wings of which it is anchored to the robot body and whose web has, at least, two housing compartments for the related tools associated to an assembly defined by:
✔ the tool itself;
✔ a supply battery of the tool;
✔ an electronic box, and;
✔ a gripping body through the pliers of the articulated arm.

In addition, the above-mentioned assembly incorporates a safety device that upon placing it in the related toolholder support compartment causes the tool to stop and its hypothetical actuation. In a preferred embodiment, the vision camera mounted on the free end of the articulated arm or on the pliers incorporates an infrared emitter for communicating with the tool and several illumination LEDs. Preferably, the electronic box, composing the assembly that groups the related tool, features an on/off switch, an infrared transmission window and a supply connector to be used, for example, with disruptor barrels.

The different compartments may incorporate several tool detection and control means based, for example, on magnets, thus allowing for the robot to always know which tool is placed in each of the different compartments.

To complement the description being made below, and to make it easier to better understand the characteristics of the invention, this descriptive report is accompanied by a set of drawings in which, for illustrative and not restrictive purposes, the following has been represented.

### BRIEF DESCRIPTION OF THE DESIGNS

Figure 1 Figure 1 shows a side elevation view of a robot provided with a toolholder support in its rear part and a vision camera rigidly joined to the pliers in which the articulated arm incorporated to the robot ends and the articulated arm of which is provided with a 360° pivotal movement, such that the pliers carry a tool assembly, specifically, a drill.

Figure 2 shows a plan view of the robot of the preceding figure, allowing for the observation of the rear part of the toolholder support and the vision camera gripped by the pliers in which the articulated arm thereof ends, the articulated arm being provided with a 360° pivotal movement and whose pliers carry the tool and, specifically, a drill.

Figure 3 shows a perspective view of the vision camera mounted on the free end of the articulated arm or on the pliers.

Figure 4 shows a perspective view of the toolholder support, allowing for observing how the housing compartments of the assembly grouping the tools are disassembled.

Figure 5 shows a perspective view of the electronic box composing the assembly grouping the tools.

Figure 6 shows a perspective view of an assembly grouping a tool, composed by a drill, an actuation battery thereof, an electronic box and the gripping body through the pliers.

Figure 7 shows a perspective and exploded view of an assembly grouping a cut saw with the supply battery coupled thereto, the electronic box and the gripping body through the pliers, as well as the coupling and attachment of the saw to the assembly.

Figure 8 shows a perspective and exploded view of an assembly grouping a disruptor, the supply battery, the electronic box and the gripping body through the pliers, as well as the coupling and attachment of the disruptor.

Figure 9 shows a view similar to that of the previous figure wherein the assembly has two disruptors mounted thereon.

Figure 10 shows a rear view of the toolholder support wherein three assemblies related to a drill, a saw and a disruptor have been mounted.

Figure 11 shows a top perspective view of the toolholder support of the preceding figure.

### DESCRIPTION OF A PREFERRED EMBODIMENT

In view of the described figures and according to the numbering adopted, it may be observed how a robot 1 of the type used in the manipulation of suspicious ordnances, such as potential explosives charges, and wherein an articulated arm 2 is provided, usually ending in pliers 3, through which the suspicious ordnances are manipulated, such that the pliers 3 incorporate a vision camera 4, while the robot body 1 carries a toolholder support 5, said toolholder support 5 being defined by a generally U-shaped structure through the wings of which it is anchored to the robot body and whose web has, at least, two housing compartments 6 for the related tools associated to an assembly 7.

The assemblies 7 grouping the tools comprise the tool 8, 9 or 10 itself, the supply battery 11 of the tool 8, 9 or 10, an electronic box 12 and a gripping body 13 through the pliers 3 of the articulated arm 2.

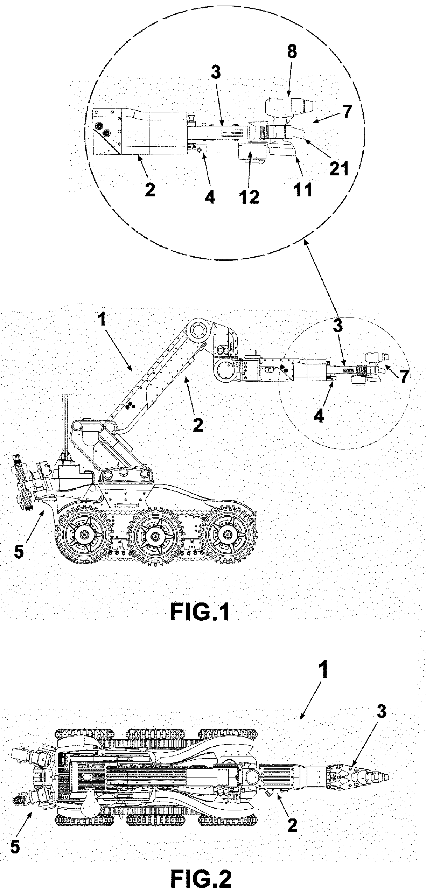

Thus, if Figure 1 of the designs, and the detailed section "A" therein are observed, it may be seen how a vision camera 4 has been attached to the pliers 3 and how the pliers 3 have an assembly 7 gripped thereto. Said assembly 7 groups the related tool, in this case, a drill 8, the supply battery 11 thereof, the electronic box 12 to communicate with the vision camera 4 through infrared means and a body 13 through which the assembly 7 is gripped by the pliers 3.

The vision camera 4 incorporates a vision camera 4' to lead the pliers 3 through the operations to be carried out, an infrared emitter 14 and several illumination LEDs for the pliers 3.

The toolholder support 5 is defined by a generally U-shaped structure through the wings of which it is anchored to the robot body and whose web has, in a preferred embodiment of the invention, three housing compartments 6 for the related tools associated to an assembly 7. Logically, the number of compartments may vary depending on the needs.

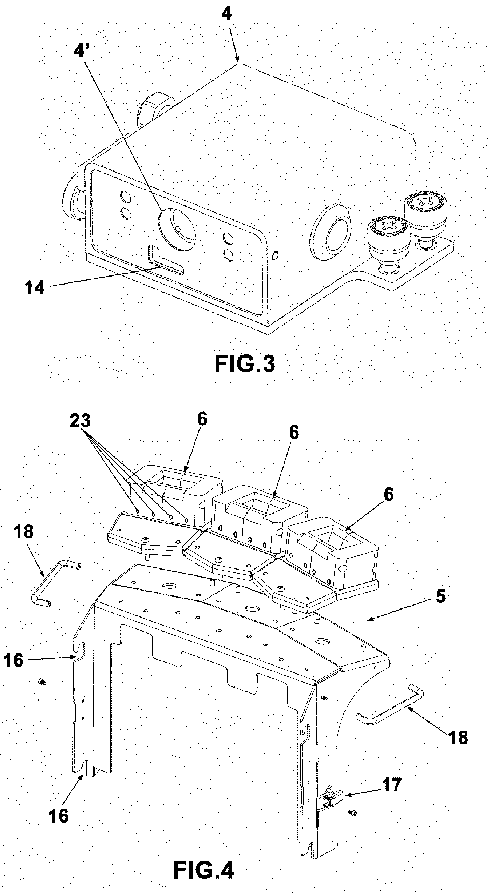

By observing Figure 4 of the designs, it may be appreciated how the wings of the generally U-shaped structure feature the mounting means in the robot body 1, such that said means are based on a hanging/fitting "hooks" 16 and several fastening "latches" 17. In addition, the above-mentioned support 5 features a pair of handles 18 for gripping it during the assembly and disassembly of robot 1.

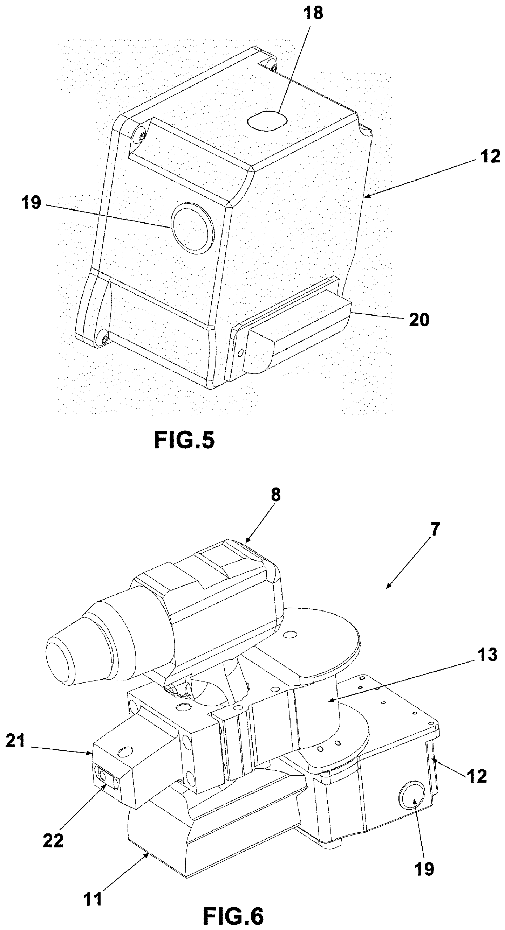

Figure 5 of the designs represents an electronic box 12 incorporating an infrared transmitter 18, an on/off switch 19 and a direct current connector 20 for, for example, disruptor barrels.

In Figure 6 of the designs, an assembly 7 has been represented, composed by a drill 8, a supply battery 11, an electronic box 12 and a gripping body 13 through the pliers 3, wherein, through the opposite side of the gripping side of the pliers 3, it features a fitting element 21 in the related compartment 6 of the toolholder support 5, and which incorporates, associated to the toolholder support, a magnetic safety device composed of:
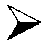 a magnet, for example, made of neodymium, located in the related compartments 6, and;
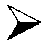 a magnetic sensor located in the element 21 of the assembly 7,
such that upon arranging the assembly 7 in the toolholder 5, fitting the element 21 in the related compartment 6, the magnetic sensor detects the magnet and cuts off the supply of battery 11, thus turning off the tool and preventing it from starting.

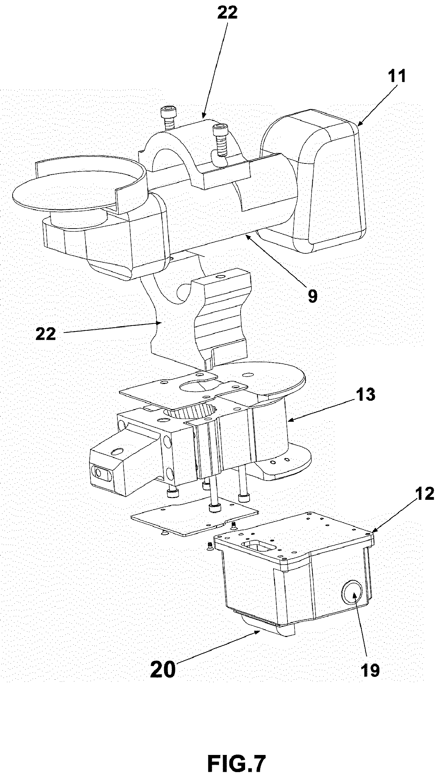

A disassembled assembly 7 related to a saw 9 may be observed in Figure 7 of the designs, it being related to a supply battery 11, the gripping body 13 through the pliers 3 with the element 21, incorporating the safety device, the electronic box 12 and a clamp-like coupling and fastening body of the tool, in this case, of the saw 9.

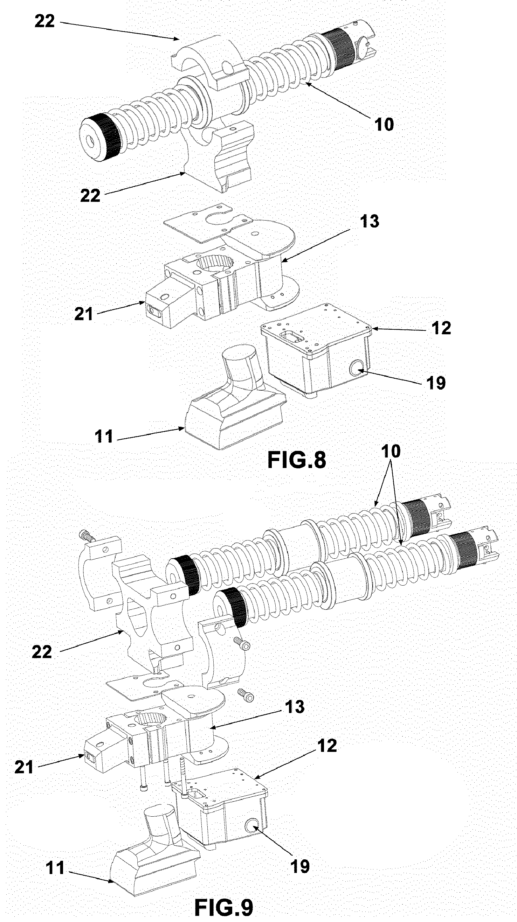

A disassembled assembly 7 related to a disruptor 10 may be observed in Figure 8 of the designs, likewise incorporating a supply battery 11, the gripping body 13 through the pliers 3 with the element 21 that incorporates the safety device, the electronic box 12 and a clamp-like coupling and fastening body of the tool, in this case, the disruptor 10.

Figure 9 is a representation similar to that of Figure 8 with the variation that the assembly 7 has a pair of disruptors 10 that would allow for a new shot should the first shot be missed, the only variation being that the coupling and fastening body 22 of the disruptors has been adapted to have them both fastened.

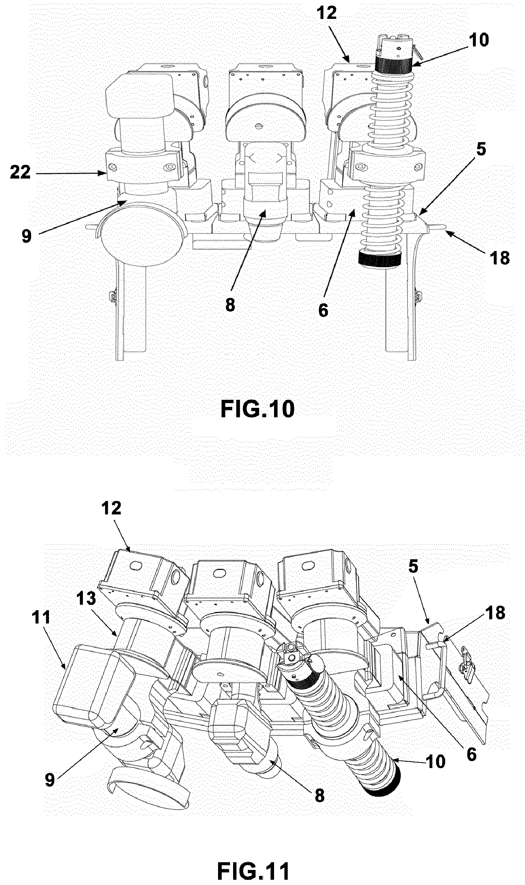

In Figures 10 and 11, as well as in Figures 1 and 2, the toolholder support 5 may be appreciated with the related tools associated to the related assemblies 7 located in the compartments 6, the assemblies 7 of which, upon entering the related order in the robot 1 of the tool to be selected, will be gripped by the pliers 3, for the purpose of which the articulated arm pivots towards the rear part of the robot 1 and, once the tool is gripped, proceeds to operate suitably.

Thus, should it be the drill 8 or the saw 9 it may conduct operations or manoeuvres that may be needed to access certain places where said ordnance considered suspicious is located, such that the robot is capable of picking or leaving them as needed, without having to displace the robot, with the waste of time this entails.

On the other hand, if an explosive ordnance is to be detonated, the articulated arm 2 of the robot 1 will rotate to grip the assembly 7 carrying, at least, one disruptor 10 such that it is placed at a short distance of the explosive ordnance and, after firing the water stored in the tube or barrel at remarkable speed, it is micronized or almost evaporated becoming embedded to the explosive and separating it from the explosive, giving it no time to detonate.

In addition, should the assembly 7 carry two disruptors, and the first shot be missed, it will be possible to make a second attempt at remarkable speed, this entailing a significant advantage.

Furthermore, the different compartments 6 may incorporate several tool detection and control means based, for example, on magnets 23, thus allowing for the robot to always know which tool is contained in each of the different compartments 6.

## Claims

1. A robot with a toolholder support, the robot being of the type used in the manipulation of suspicious ordnances, such as potential explosive charges, wherein an articulated arm is provided, generally ending in pliers, through which the suspicious ordnances are manipulated, wherein the free end of the articulated arm (2) or the pliers (3) incorporate a vision camera (4), while the robot body (1) carries a toolholder support (5), the toolholder support (5) being defined by a generally U-shaped structure through the wings of which it is anchored to the robot body (1) and whose web has, at least, two housing compartments (6) for the related tools (8, 9, 10) associated to an assembly (7) defined by:
✔ the tool (8, 9, 10) itself;
✔ a supply battery (11) of the tool;
✔ an electronic box (12), and;
✔ a gripping body (13) through the pliers (3) of the articulated arm (2),
wherein the assembly (7) incorporates a safety device that upon being placed in the related compartment (6) causes the tool to stop and prevents its hypothetical actuation.

2. A robot with a toolholder support, according to claim 1, **characterised in that** the vision camera (4) mounted on the free end of the articulated arm (2) or on the pliers (3) incorporates an infrared emitter (14) to communicate with the tool and several illumination LEDs (15).

3. A robot with a toolholder support, according to claim 1, **characterised in that** the toolholder support (5) features three housing compartments (6) for the related tools (8, 9, 10) associated to the corresponding assembly (7) associated to each of said tools.

4. A robot with a toolholder support, according to claim 1, **characterised in that** the electronic box (12) features an on/off switch (19), an infrared transmission window (18) and a current connector (20) for the disruptor barrels (10).

5. A robot with a toolholder support, according to claim 1, **characterised in that** the safety device which causes the tool to stop and prevents its hypothetical actuation comprises:
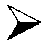 a magnet, located in the corresponding compartments (6), and;
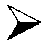 a magnetic sensor located in the element (21) of the assembly (7),
such that upon arranging the assembly (7) in the toolholder (5), fitting the element (21) in the related compartment (6), the magnetic sensor detects the magnet and cuts off the battery (11) supply.

## Patentansprüche

1. Roboter mit Werkzeughalterträger, wobei der Roboter von dem Typ ist, der bei der Handhabung verdächtiger Kampfmittel verwendet wird, wie beispielsweise potenziell explosive Ladungen, wobei ein Gelenkarm vorgesehen ist, der im Allgemeinen in einer Zange endet, durch die die verdächtigen Kampfmittel manipuliert werden, wobei das freie Ende des Gelenkarms (2) oder die Zange (3) eine Sucherkamera (4) beinhalten, während der Roboterkörper (1) einen Werkzeughalterträger (5) trägt, wobei der Werkzeughalterträger (5) durch eine im Allgemeinen U-förmige Struktur definiert ist, durch deren Schenkel sie an dem Roboterkörper (1) verankert ist und deren Steg mindestens zwei Gehäusekammern (6) für zugehörige Werkzeuge (8, 9, 10) aufweist, die zu einer Anordnung (7) gehören, die durch Folgendes definiert ist:
das Werkzeug (8, 9, 10) selbst;
eine Speisebatterie (11) des Werkzeugs;
eine Elektronikbox (12), und
einen Greifkörper (13) durch die Zange (3) des Gelenkarms (2), wobei die Anordnung (7) eine Sicherheitsvorrichtung beinhaltet, die nach Platzierung in der entsprechenden Kammer (6) das Werkzeug dazu veranlasst, zu stoppen, und seine hypothetische Betätigung verhindert.

2. Roboter mit Werkzeughalterträger nach Anspruch 1, **dadurch gekennzeichnet, dass** die Sucherkamera (4), die an dem freien Ende des Gelenkarms (2) oder der Zange (3) montiert ist, einen Infrarotstrahler (14) beinhaltet, um mit dem Werkzeug zu kommunizieren, sowie mehrere Beleuchtungs-LEDs (15).

3. Roboter mit Werkzeughalterträger nach Anspruch 1, **dadurch gekennzeichnet, dass** der Werkzeughalterträger (5) drei Gehäusekammern (6) für zugehörige Werkzeuge (8, 9, 10) aufweist, die zu der entsprechenden Anordnung (7) gehören, die zu den einzelnen Werkzeugen gehört.

4. Roboter mit Werkzeughalterträger nach Anspruch 1, **dadurch gekennzeichnet, dass** die Elektronikbox (12) einen Ein/Aus-Schalter (19), ein Infrarotübertragungsfenster (18) und einen Stromstecker (20) für Unterbrechereinheiten (10) aufweist.

5. Roboter mit Werkzeughalterträger nach Anspruch 1, **dadurch gekennzeichnet, dass** die Sicherheitsvorrichtung, die das Werkzeug dazu veranlasst, zu stoppen, und seine hypothetische Betätigung verhindert, umfasst:
einen Magnet, der in den entsprechenden Kammern (6) angeordnet ist, und
einen Magnetsensor, der in dem Element (21) der Anordnung (7) angeordnet ist,
so dass bei Platzierung der Anordnung (7) in dem Werkzeughalter (5) und bei Einsetzen des Elements (21) in die entsprechende Kammer (6) der Magnetsensor den Magnet ermittelt und die Batterieversorgung (11) unterbricht.

## Revendications

1. Robot avec un support de porte-outil, le robot étant du type utilisé dans la manipulation de pièces d'artillerie suspectes, telles que des charges explosives potentielles, dans lequel un bras articulé est prévu, se terminant généralement par une pince, par le biais de laquelle les pièces d'artillerie suspectes sont manipulées, dans lequel l'extrémité libre du bras articulé (2) ou de la pince (3) comprend une caméra (4), alors que le corps de robot (1) porte un support de porte-outil (5), le support de porte-outil (5) étant défini par une structure généralement en forme de U par le biais des ailes de laquelle il est ancré au corps de robot (1), et dont l'âme a, au moins deux compartiments de logement (6) pour les outils (8, 9, 10) concernés, associés à un ensemble (7) défini par :
l'outil (8, 9, 10) lui-même;
une batterie d'alimentation (11) de l'outil;
un boîtier électronique (12) ; et
un corps de préhension (13) à travers la pince (3) du bras articulé (2),
dans lequel l'ensemble (7) comprend un dispositif de sécurité qui après avoir été placé dans le compartiment (6) concerné, provoque l'arrêt de l'outil et empêche son actionnement hypothétique.

2. Robot avec un support de porte-outil selon la revendication 1, **caractérisé en ce que** la caméra (4) montée sur l'extrémité libre du bras articulé (2) ou sur la pince (3), comprend un émetteur infrarouge (14) pour communiquer avec l'outil et plusieurs diodes électroluminescentes (15).

3. Robot avec un support de porte-outil selon la revendication 1, **caractérisé en ce que** le support de porte-outil (5) présente trois compartiments de logement (6) pour les outils (8, 9, 10) concernés, associés à l'ensemble correspondant (7), associés à chacun desdits outils.

4. Robot avec un support de porte-outil selon la revendication 1, **caractérisé en ce que** le boîtier électronique (12) présente un commutateur de marche / arrêt (19), une fenêtre de transmission infrarouge (18) et un connecteur de courant (20) pour les canons disrupteurs (10).

5. Robot avec un support de porte-outil selon la revendication 1, **caractérisé en ce que** le dispositif de sécurité qui peut provoquer l'arrêt de l'outil et empêcher son actionnement hypothétique, comprend :
un aimant positionné dans les compartiments (6) correspondants ; et
un capteur magnétique positionné dans l'élément (21) de l'ensemble (7), de sorte qu'après avoir agencé l'ensemble (7) dans le porte-outil (5), monté l'élément (21) dans le compartiment (6) concerné, le capteur magnétique détecte l'aimant et arrête l'alimentation de batterie (11).
